# EUROPÄISCHE PATENTSCHRIFT

(11) **EP 4 098 235 B1**
(45) Veröffentlichungstag und Bekanntmachung des Hinweises auf die Patenterteilung: **05.08.2026**
(21) Anmeldenummer: 21177804.8
(22) Anmeldetag: 04.06.2021
(51) Int. Cl.: A61G 3/06, B60P 1/44

(54) **KRAFTFAHRZEUG MIT PLATTFORMLIFT-SYSTEM ZUM SICHEREN TRANSPORT VON PERSONEN**
MOTOR VEHICLE COMPRISING PLATFORM LIFT SYSTEM FOR SECURELY TRANSPORTING PERSONS
VÉHICULE AUTOMOBILE DOTÉ D'UN SYSTÈME DE PLATE-FORME ÉLÉVATRICE DESTINÉ AU TRANSPORT SÉCURISÉ DES PERSONNES

(43) Veröffentlichungstag der Anmeldung: 07.12.2022
(73) Patentinhaber: Ambulanz Mobile GmbH & Co. KG, 39218 Schönebeck (DE)
(72) Erfinder: SCHWARZ, Hans-Jürgen, 39218 Schönebeck (DE); RAULIEN, Volker, 39218 Schönebeck (DE)
(74) Vertreter: Freischem & Partner Patentanwälte mbB

(56) Entgegenhaltungen:
- DE-A1- 2 617 754
- DE-A1- 2 928 607
- DE-A1- 3 123 546
- DE-A1- 3 820 339
- US-A- 4 664 584

## Beschreibung

Die Erfindung betrifft ein Kraftfahrzeug mit einem Plattformlift-System zum sicheren Transport von Personen. Insbesondere ist die Erfindung für einen Rettungswagen, einen Krankentransportwagen oder ein Transportfahrzeug zur Beförderung von Menschen mit motorischen Einschränkungen vorgesehen, wie beispielsweise in einem Transportstuhl sitzende Menschen. Mit einem Transportstuhl sind insbesondere Rollstühle und Tragestühle gemeint. Die Erfindung betrifft insoweit insbesondere ein Kraftfahrzeug in Form eines Rettungswagens, eines Krankentransportwagens oder eines Transportfahrzeuges zur Beförderung von Menschen in einem Transportstuhl.

Aus der Praxis sind verschiedene Plattformlift-Systeme bekannt, um eine in einem Rollstuhl sitzende Personen in ein Kraftfahrzeug zu heben und mit dem Kraftfahrzeug zu transportieren. Außenlifte sind derart an einem Kraftfahrzeug montiert, dass diese von außen zugänglich sind. Diese können beispielsweise in einer Art Kassette verstaut sein, um im Bedarfsfall eine Plattform aus der Kassette herauszufahren. Die Plattform kann dann auf das Fahrbahnniveau abgesenkt werden, um einen Patienten oder einen Transportstuhl aufzuladen und die Plattform anschließend auf das Niveau des Fahrzeugbodens anzuheben. Dort muss der Patient bzw. der Transportstuhl dann in Fahrtrichtung ausgerichtet werden und separat durch das Personal angegurtet werden. Ferner muss der Transportstuhl anschließend noch in seiner Position fixiert werden und der Patient gegenüber dem Transportstuhl fixiert werden, um einen transportfähigen Zustand herzustellen. Es sind insoweit verhältnismäßig viele Arbeitsschritte erforderlich, was zeit-, personal- und kostenintensiv ist.

Aus DE 29 28 607 A1 ist eine schwenkbare waagerechte Hubplattform bekannt, die an einer auf der Ladefläche eines Lastkraftwagens stehenden lotrechten Tragsäule gehalten sowie heb- und senkbar ist. Das Verschwenken der Hubplattform erfolgt um die Längsachse der Tragsäule. Die Hubplattform dient zum Be- und Entladen, insbesondere von Personen, und weist lotrechte Führungen auf, die zum einen zwischen der Hubplattform und einem von der Tragsäule gehaltenen Hubgerüst und zum anderen zwischen der Tragsäule und dem Hubgerüst angeordnet sind. Die lotrechten Führungen sind über Tragarme derart voneinander beabstandet, dass eine Hubstange, die längsverschiebbar in einer Zylinderhülse geführt ist, das Anheben und Absenken der Hubplattform außerhalb des Lastkraftwagens ermöglicht. Dadurch kann die Hubplattform auch auf ein Niveau angehoben werden, das höher ist als das Niveau der Ladefläche in dem Lastkraftwagen. Nachteilig an der Hubplattform ist, dass nach dem Einladen einer Person, insbesondere einer in einem Rollstuhl oder Tragestuhl sitzenden Person, diese noch innerhalb eines Kraftfahrzeuges positioniert und dort in einen transportfähigen Zustand gebracht werden muss. Dies ist mit erheblichem Aufwand verbunden.

Aus US 4,664,584 A ist ein drehbarer Rollstuhllift umfassend eine Hubeinheit mit einer vertikalen Teleskopstange und einen am unteren Ende der Teleskopstange befestigten, horizontalen Tragarm für eine Rollstuhlplattform bekannt. Mittels der Hubeinheit kann die Rollstuhlplattform vertikal bewegt werden. Dabei dient die Teleskopstange auch als Fixierelement zur Fixierung der Rollstuhlplattform gegenüber der Hubeinheit. Mittels eines Linearantriebs, welcher an einem Fahrzeug-fixen Punkt der Hubeinheit und an einem exzentrisch einer Drehachse der Rollstuhlplattform gelegenen Punkt der Rollstuhlplattform fixiert ist, kann die Rollstuhlplattform um die vertikale Drehachse geschwenkt werden. Die Rollstuhlplattform weist zudem eine vordere Sicherheitsbegrenzung und eine zu einer hinteren Sicherheitsbegrenzung hochklappbare hintere Einstiegsrampe auf, welche ein Wegrollen eines Rollstuhls verhindern sollen.

Aus DE 26 17 754 A1 ist eine in ein Kraftfahrzeug eingebaute Vorrichtung zum Ein- und Ausladen von in einem Rollstuhl sitzenden Menschen bekannt. Die Vorrichtung weist eine Plattform für den Rollstuhl auf, welche auf einem Transportschlitten in Richtung der Fahrzeugquerachse bis außerhalb des Fahrzeugs verfahrbar sowie senkrecht heb- und senkbar angeordnet ist. Für die senkrechte Hubbewegung der Plattform ist eine elektromotorisch angetriebene Seilwindeneinrichtung und für die Querbewegung eine elektromotorisch angetriebene Transportspindel vorgesehen. Durch die Seilwindeneinrichtung und die Transportspindel ist auch eine Fixierung der Plattform gegenüber der Hubeinrichtung gegeben. Eine Arretierung des Rollstuhls in der Plattform erfolgt mittels Rollwiderständen.

Aus DE 38 20 339 A1 ist ein Rollstuhl-Einstieg im Bereich des Fahrerplatzes von Linienbussen bekannt. Der Rollstuhl-Einstieg weist eine hinter der Öffnung der Einstiegstüren im Fahrzeug angeordnete Grundplattform, eine Hub-/Senkeinrichtung und eine über der Grundplattform angeordnete Trittstufe auf. Mittels der Hub-/Senkeinrichtung kann die Grundplattform mit einem darauf befindlichen Rollstuhl zwischen verschiedenen Stellungen angehoben und abgesenkt werden. Dabei ist die Hub-/Senkeinrichtung in einer einzigen Säule untergebracht, die in einem Bereich der Grundplattform befestigt ist, welcher an der Fahrzeugfront angrenzt. Die Trittstufe ist über der Grundplattform angeordnet. Sie ist horizontal aus der vertikalen Bewegungsrichtung der Grundplattform verschiebbar, um nicht mit der Grundplattform zu kollidieren, wenn diese angehoben oder abgesenkt wird.

Aus DE 31 23 546 A1 ist ein Rollstuhl- und Lastenlift zum Beladen und Entladen eines Fahrzeuges bekannt. Der Rollstuhl- und Lastenlift weist ein am Fahrzeug befestigtes, geneigtes Halterohr und ein am Halterohr geführtes, höhenverstellbares Teleskopglied auf. Am unteren Ende des Teleskopglieds ist eine Ladeplattform angeschlossen. Das geneigte Halterohr ist oberhalb einer Ladefläche derart angeordnet, dass das Teleskopglied mit der Ladeplattform unbehindert über die Ladeflächenkante hinweggeführt werden kann. Zu diesem Zweck ist das Halterohr derart angeordnet, dass der lineare Verstellweg des Teleskopglieds und der Ladeplattform quer über die Ladeflächenkante hinwegführt. Ferner sind die Ladeplattform und das Teleskopglied mittels einer Schwenkverbindung mit senkrechter Schwenkachse miteinander verbunden.

Der Erfindung liegt die Aufgabe zugrunde, ein Kraftfahrzeug mit einem Plattformlift-System zum Einladen eines Transportstuhls in das Kraftfahrzeug zur Verfügung zu stellen, das es ermöglicht, Menschen mit motorischen Einschränkungen, insbesondere in einem Transportstuhl sitzende Menschen, sicher und komfortabel in ein Kraftfahrzeug einladen und innerhalb des Kraftfahrzeuges in einen transportfähigen Zustand zu bringen.

Die Lösung der Aufgabe erfolgt erfindungsgemäß mit den Merkmalen der unabhängigen Ansprüche. Weitere Ausführungsformen und Vorteile der Erfindung sind in Verbindung mit den abhängigen Ansprüchen beschrieben.

Ein erfindungsgemäßes Kraftfahrzeug mit einem Plattformlift-System zum Einladen eines Transportstuhls in das Kraftfahrzeug umfasst eine Plattform für die Aufnahme des Transportstuhls mit einer Transportperson, eine Hubeinheit zur Durchführung von vertikalen Relativbewegungen der Plattform zwecks Anheben und Absenken der Plattform und eine Verfahrvorrichtung zur Durchführung von horizontalen Relativbewegungen zwischen der Plattform und der Hubeinheit. Dabei ist an einem Element des Kraftfahrzeuges mindestens ein Fixierelement zur Fixierung der Plattform gegenüber der Hubeinheit vorgesehen. Ferner ist an einem Element des Plattformlift-Systems und/oder an einem Element des Kraftfahrzeuges, in welchem das Plattformlift-System installiert ist, mindestens eine mit dem Fixierelement korrespondierende Fixierelement-Aufnahme zur Herstellung einer Verbindung zwischen Fixierelement und Fixierelement-Aufnahme angeordnet, wobei als Fixierelement und als Fixierelement-Aufnahme zur Fixierung der Plattform gegenüber der Hubeinheit an der Plattform und an der Hubeinheit mindestens ein Bolzen und eine mit dem Bolzen korrespondierende Bolzenaufnahme vorgesehen sind. Dabei sind der Bolzen und die Bolzenaufnahme als Vertikalverbindungselemente derart gestaltet, dass die formschlüssige Verbindung durch Anheben und Absenken der Plattform herstellbar und lösbar ist. Das erfindungsgemäße Kraftfahrzeug mit Plattformlift-System hat den Vorteil, dass - abhängig von der jeweiligen Ausführungsform des erfindungsgemäßen Kraftfahrzeuges mit Plattformlift-System - ein oder mehrere Teilschritte für die Herstellung der Transportfähigkeit einer zu transportierenden Person entfallen, weil die konstruktive Gestaltung des Plattformlift-Systems geeignete integrale Funktionen aufweist, auf welche nachfolgend im Detail eingegangen wird. Dadurch können in einem Transportstuhl sitzende Menschen, sicher und komfortabel in ein Kraftfahrzeug eingeladen und mit verringertem Zeit- und Kostenaufwand in einen transportfähigen Zustand gebracht werden.

Als Verfahrvorrichtung kann insbesondere ein Gelenk und/oder ein Getriebe vorgesehen sein. Die Verfahrvorrichtung kann manuell oder motorisch betätigbar sein.

Bei dem erfindungsgemäßen Kraftfahrzeug mit Plattformlift-System ist an einem der Elemente des Plattformlift-Systems und/oder an einem Element des Kraftfahrzeuges, in welchem das Plattformlift-System installiert ist, mindestens eine mit dem Fixierelement korrespondierende Fixierelement-Aufnahme zur Herstellung einer - vorzugsweise formschlüssigen - Verbindung zwischen Fixierelement und Fixierelement-Aufnahme angeordnet. Besonders bevorzugt sind in diesem Zusammenhang konstruktiv einfache Elemente zur Herstellung von formschlüssigen Verbindungen, die durch eine geeignete Relativbewegung von Fixierelement und Fixierelement-Aufnahme hergestellt und wieder gelöst werden können. Als Element eines Kraftfahrzeuges zur Anordnung oder Ausbildung einer Fixierelement-Aufnahme eignet sich insbesondere ein fahrzeugfestes Element, wie z.B. ein Fahrzeugboden oder ein gegenüber dem Fahrzeuboden fixiertes Element, wie z.B. eine Trennwand eines Kraftfahrzeuges.

Als Fixierelement und Fixierelement-Aufnahme zur Fixierung der Plattform gegenüber der Hubeinheit sind an der Plattform und an der Hubeinheit mindestens ein Bolzen und eine mit dem Bolzen korrespondierende Bolzenaufnahme vorgesehen. Dabei kann als Bolzenaufnahme insbesondere eine Öffnung dienen, die es ermöglicht, den Bolzen einzuführen, wobei es besonders bevorzugt ist, wenn der Bolzen konisch oder anderweitig geeignet ausgebildet ist, um eine im Wesentlichen spielfreie Fixierung des Bolzens in der Bolzenaufnahme zu bewirken, wenn der Bolzen bestimmungsgemäß in der Bolzenaufnahme angeordnet ist. Besonders bevorzugt ist es, wenn mittels eines Bolzens und einer korrespondierenden Bolzenaufnahme eine formschlüssige Fixierung in horizontaler Richtung ermöglicht ist, d.h. in Fahrzeuglängsrichtung und Fahrzeugquerrichtung.

Die Betätigung eines erfindungsgemäßen Kraftfahrzeugs mit Plattformlift-System ist besonders einfach, weil der Bolzen und die Bolzenaufnahme als Vertikalverbindungselemente derart gestaltet sind, dass die formschlüssige Verbindung durch Anheben und Absenken der Plattform hergestellt und gelöst werden kann. In diesem Fall kann die ohnehin für das Anheben und Absenken der Plattform vorhandene Hubeinheit auch für das Herstellen und Lösen der formschlüssigen Verbindung zwischen Plattform und Hubeinheit genutzt werden.

In einer weiteren praktischen Ausführungsform eines erfindungsgemäßen Kraftfahrzeuges mit Plattformlift-System ist zur Fixierung des Transportstuhls und/oder der Transportperson gegenüber der Plattform an der Plattform oder an der Hubeinheit mindestens ein Gurt angeordnet. Dabei kann es sich insbesondere um einen von Kraftfahrzeugen bekannten 3-Punkt-Gurt handeln.

Unabhängig davon, um welche Art von Gurt es sich handelt, ist es weiter bevorzugt, wenn an der Plattform oder an der Hubeinheit mindestens ein Gurtschloss zur Festlegung des Gurtes angeordnet ist. Mit Hilfe eines 2-Punkt-Gurtes, eines 3-Punkt-Gurtes oder eines sonstigen Gurtes kann in diesem Fall durch einfaches Anschnallen ein Transportstuhl gegenüber der Plattform und/oder eine auf einem Transportstuhl sitzende Transportperson gegenüber dem Transportstuhl und/oder gegenüber der Plattform fixiert werden. Besonders intuitiv bedienbar ist ein erfindungsgemäßes Kraftfahrzeug mit Plattformlift-System, wenn an der Plattform oder an der Hubeinheit ein Gurt und ein Gurtschloss angeordnet sind und als Fixierelement und Fixierelement-Aufnahme vorgesehen sind. Denn in diesem Fall kann eine in einem Transportstuhl sitzende Transportperson mit dem Gurt in gleicher Art und Weise wie eine in einem Standard-Kraftfahrzeug sitzende Person angeschnallt werden, um diese in dem Transportstuhl in einen transportfähigen Zustand zu bringen. Dabei wird eine Einheit aus dem beweglichen Transportstuhl mit der Plattform und dem Fahrzeugboden gebildet, wobei alle Elemente relativ zueinander fixiert sind. Dies ist insbesondere dann besonders komfortabel und sicher möglich, wenn zusätzlich der Transportstuhl formschlüssig innerhalb des Kraftfahrzeuges fixierbar ist. Dies kann ebenfalls über mindestens ein Fixierelement und eine korrespondierende Fixierelement-Aufnahme erfolgen, insbesondere wie vorstehend oder wie nachfolgend beschrieben.

In einer weiteren praktischen Ausführungsform eines erfindungsgemäßen Kraftfahrzeuges mit Plattformlift-System sind der Gurt und/oder das Gurtschloss außenseitig der Plattform angeordnet. Dabei sind Gurt und Gurtschloss vorzugweise fest mit der Plattform und/oder mit der Hubeinheit verbunden, insbesondere derart, dass die Relativposition von Gurt und Gurtschloss in einer Transportposition eines auf der Plattform angeordneten Transportstuhls vorgegeben ist. Die Relativposition ist dann in einer besonders bevorzugten Ausführungsform so gewählt, dass der Gurt und das Gurtschloss sich in Greifreichweite einer in dem Transportstuhl sitzenden Transportperson befinden, so dass das Angurten entweder von der zu transportierenden Person (Transportperson) selbst oder einer anderen Person erfolgen kann.

Wenn bei einem erfindungsgemäßen Kraftfahrzeug mit Plattformlift-System die Plattform fest verbunden ist mit einem sich in vertikaler Richtung erstreckenden Tragabschnitt, ergibt sich eine besonders biegesteife Struktur, die insbesondere dann erforderlich und hilfreich ist, wenn das Gewicht aus Plattform, Transportstuhl und einer darauf sitzenden Transportperson regelmäßig größer als 100 kg ist, insbesondere zwischen 100 kg und 200 kg. Aus Gewichts- und Kostenaspekten bevorzugt ist es, wenn der Tragabschnitt als Tragrahmen ausgebildet ist, insbesondere als ein u-förmiger oder geschlossener Tragrahmen. Der Tragabschnitt erstreckt sich vorzugsweise über einen Großteil der Breite der Plattform und über einen Großteil der Höhe eines Transportstuhls, d.h. vorzugsweise sowohl in Querrichtung als auch in Hochrichtung über mindestens 50 cm, weiter bevorzugt mindestens 60 cm oder besonders bevorzugt mindestens 80 cm, in Hochrichtung auch mindestens 100 cm.

Um ein kontrolliertes Verdrehen der Plattform eines erfindungsgemäßen Kraftfahrzeugs mit Plattformlift-Systems zu ermöglichen, ist es bevorzugt, wenn die Plattform verschwenkbar gegenüber der Hubeinheit gelagert ist. Dabei hat es sich als besonders bevorzugt erwiesen, wenn die Plattform funktional über ein Doppelgelenk mit der Hubeinheit verbunden ist, weil dann der Platzbedarf für das Verschwenken aus einer Transportposition in eine Position außerhalb des Kraftfahrzeuges zum Absenken auf das Fahrbahnniveau besonders gering ist.

Vorstehend wurde bereits in Verbindung mit dem Gurt darauf hingewiesen, dass es vorteilhaft ist, wenn sich bei einem erfindungsgemäßen Kraftfahrzeug mit Plattformlift-System der Transportstuhl relativ gegenüber der Plattform festlegen lässt. Dies ist besonders einfach und kostengünstig möglich, wenn an der Plattform ein Schlitz zum Zusammenwirken mit einem Kupplungselement eines Transportstuhls ausgebildet ist. Dabei wird insbesondere auf pilzkopfartig ausgebildete Kupplungselemente an Tragestühlen bzw. Rollstühlen verwiesen, die unterseitig eines derartigen Stuhls angeordnet und aus der Praxis bekannt sind. Es ist bevorzugt, wenn an der Plattform ein in Transportposition in Fahrzeuglängsrichtung orientierter Schlitz vorgesehen ist, die es ermöglicht, durch einfaches Einschieben von ein oder mehreren Kupplungselementen, insbesondere pilzkopfartigen Kupplungselementen, eine in Fahrzeugquerrichtung formschlüssige Festlegung eines Transportstuhls zu bewirken. Zusätzlich kann an der Plattform auch ein Rastmechanismus vorgesehen sein, mittels welchem ein Kupplungselement oder mehrere Kupplungselemente auch in Fahrzeuglängsrichtung fixiert werden, wenn eine Soll-Position zwischen Transportstuhl und Plattform erreicht ist. Zum Lösen des Rastmechanismus kann die Bedienung eines Betätigungselements erforderlich sein, insbesondere eines Entsperrelements, wie z.B. eines Hebels oder Knopfes, ähnlich wie bei einem aus Standard-Kraftfahrzeugen bekannten Gurtschloss.

Wenn bei einem erfindungsgemäßen Kraftfahrzeug mit Plattformlift-System an der Plattform als Führung für Räder eines Transportstuhls dienende Fahrrinnen ausgebildet sind und/oder an der Plattform ein Fixierabschnitt für einen Transportstuhl ausgebildet ist, kann die Bedienung weiter vereinfacht werden. Vertiefungen können besonders einfach hergestellt werden, wenn als Plattform ein entsprechend geformtes Profilelement verwendet wird, beispielsweise ein Profilblech oder ein aus Kunststoff geeignet geformtes Profilelement.

Als Fixierabschnitt für einen Transportstuhl kann insbesondere ein erhabener Mittelsteg mit darin ausgebildetem Schlitz vorgesehen sein, wobei der Schlitz - wie vorstehend beschrieben - zum Zusammenwirken mit einem pilzkopfartigen Kupplungselement vorgesehen sein kann.

Die Erfindung betrifft ein Kraftfahrzeug mit einem wie vorstehend beschriebenen Plattformlift-System, bei welchem die Verfahrvorrichtung dazu ausgebildet ist, die Plattform zwischen einer Außenposition außerhalb des Kraftfahrzeuges und einer Transportposition innerhalb des Kraftfahrzeuges verfahren zu können. In diesem Fall kann mit dem Plattformlift-System ein Transportstuhl sowohl von einer Außenposition, insbesondere von einer Fahrbahn oder einem Bürgersteig, in das Kraftfahrzeug gehoben und verfahren werden als auch mindestens eine erste Fixierung zwischen dem Transportstuhl und dem Kraftfahrzeug erfolgen. Vorzugsweise ist das Plattformlift-System derart ausgebildet, dass damit sowohl der Transportstuhl gegenüber der Plattform als auch die Plattform gegenüber dem Kraftfahrzeug und ggf. sogar noch die Transportperson gegenüber dem Transportstuhl fixiert werden kann.

Wenn eine Antriebseinheit und eine Steuereinheit für die Verfahrvorrichtung und/oder die Hubeinheit vorgesehen sind, wobei eine geführte Bewegung von der Außenposition in die Transportposition vorgesehen ist, sind Fehlbedienungen nahezu ausgeschlossen, wodurch die Sicherheit für eine in dem Transportstuhl sitzende Transportperson erhöht ist. Insbesondere birgt dann eine Neigung des Kraftfahrzeuges nicht die Gefahr, dass die Plattform schwerkraftbedingt in eine nicht erwünschte Position verschwenkt wird und/oder mit anderen Fahrzeugelementen kollidiert.

Besonders bevorzugt ist es in Verbindung mit einer geführten Bewegung, wenn die Plattform in der erreichten Transportposition bereits in horizontaler Richtung formschlüssig gegenüber dem Kraftfahrzeug festgelegt ist. Dies kann insbesondere dadurch erreicht werden, dass die Plattform im letzten Bewegungsabschnitt vor Erreichen der Transportposition derart abgesenkt wird, dass ein Bolzen und eine Bolzenaufnahme eine in horizontaler Richtung formschlüssige Verbindung zwischen Plattform und dem Kraftfahrzeug herstellen, beispielsweise indem an einem fahrzeugseitig festgelegten Element der Hubeinheit oder am Fahrzeugboden selbst ein Bolzen angeordnet ist, der mit einer an der Plattform ausgebildeten Bolzenaufnahme zusammenwirkt.

Die Erfindung wurde insbesondere als Kraftfahrzeug gemacht, bei welchen die Hubeinheit fahrzeugfest montiert ist und/oder die Hubeinheit an einer Trennwand nahe einer Seitentür angeordnet ist und/oder dazu ausgebildet ist, die Plattform von einem Fahrzeugboden bis auf ein Fahrbahnniveau abzusenken. Diesbezüglich wird insbesondere auf Kraftfahrzeuge mit einer Seitentür in Form einer Schiebetür verwiesen, die es mit Hilfe des erfindungsgemäßen Plattformlift-Systems ermöglichen, einen seitlich neben dem Kraftfahrzeug positionierten Transportstuhl mit einer darauf sitzenden Transportperson auf die Plattform zu schieben und dann gemeinsam mit dieser Plattform in das Kraftfahrzeug zu heben und innerhalb des Kraftfahrzeuges mit der Plattform auf einfache Art und Weise in einen transportfähigen Zustand zu bringen.

Weitere praktische Ausführungsformen und Vorteile der Erfindung sind nachfolgend im Zusammenhang mit den Zeichnungen beschrieben. Es zeigen:
- Fig. 1: ein erfindungsgemäßes Kraftfahrzeug mit einem Plattformlift-System in einer isometrischen Ansicht von schräg hinten einmal mit geschlossener Seitentür und einmal mit geöffneter Seitentür und ohne Dach
- Fig. 2: eine vergrößerte Darstellung des in dem Kraftfahrzeug von Figur 1 installierten Plattformlift-Systems,
- Fig. 3: das Plattformlift-System aus den Figuren 1 und 2 mit einem darauf angeordneten Transportstuhl und einer darauf sitzenden Transportperson in einer Ansicht von schräg hinten,
- Fig. 4: eine Detailansicht des unteren Abschnitts des Transportstuhls und der Plattform aus Figur 3 in einer Ansicht von hinten,
- Fig. 5: eine Ansicht des Fahrzeugbodens und des erfindungsgemäßen Kraftfahrzeuges mit Plattformlift-System in einer Ansicht von schräg vorne,
- Fig. 6: eine Detailansicht des unteren Abschnitts des Transportstuhls und der Plattform aus Fig. 5 vor der Herstellung einer formschlüssigen Verbindung zwischen Plattform und Hubeinheit,
- Fig. 7: eine Detailansicht des unteren Abschnitts des Transportstuhls und der Plattform aus Fig. 5 nach der Herstellung einer formschlüssigen Verbindung zwischen Plattform und Hubeinheit,
- Fig. 8: das Kraftfahrzeug in der Konfiguration aus Figur 1 ohne Fahrzeugdach in einer Ansicht von schräg oben, wobei sich die Plattform in der Transportposition befindet,
- Fig. 9: das Kraftfahrzeug in der Konfiguration aus Figur 1 ohne Fahrzeugdach in einer Ansicht von schräg oben, wobei sich die Plattform in einer Zwischenstellung zwischen der Transportposition und der Außenposition befindet und
- Fig. 10: das Kraftfahrzeug in der Konfiguration aus Figur 1 ohne Fahrzeugdach in einer Ansicht von schräg oben, wobei sich die Plattform in der oberen Außenposition (links) bzw. in der unteren Außenposition (rechts) befindet.

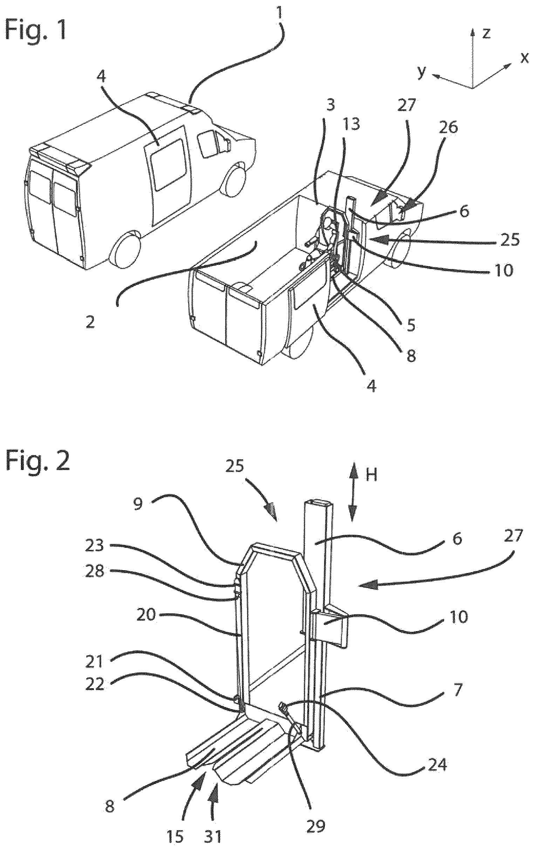

In den Figuren 1 bis 10 sind verschiedene Ansichten und Positionen eines Plattformlift-Systems 25 gezeigt, das in einem erfindungsgemäßen Kraftfahrzeug 1 installiert ist. Die Fahrzeuglängsrichtung (x-Richtung), die Fahrzeugquerrichtung (y-Richtung) und die Fahrzeughochrichtung (z-Richtung) sind in einigen der Figuren mit einem entsprechenden Koordinatensystem gekennzeichnet.

Wie in Figur 1 gut erkennbar ist, handelt es sich bei dem gezeigten Kraftfahrzeug 1 um ein Fahrzeug, das eine vorderseitige Fahrerkabine 26 und einen sich in Fahrzeuglängsrichtung betrachtet dahinter angeordneten Transportraum 2 aufweist. Dabei ist der Transportraum 2, welcher insbesondere für den Transport von Patienten bestimmt ist, durch eine Trennwand 3 von der Fahrerkabine 26 separiert. Bei dem Kraftfahrzeug 1 kann es sich insoweit beispielsweise um einen Krankentransportwagen oder einen Rettungstransportwagen handeln.

Das Kraftfahrzeug 1 weist eine Seitentür 4 auf, die hier als Schiebetür ausgebildet ist. Die Seitentür 4 ist in der Abbildung oben links in Figur 1 geschlossen und in der Abbildung unten rechts in Figur 1 geöffnet. In der Abbildung unten rechts in Figur 1 ist erkennbar, dass im Bereich der Trennwand 3 ein Plattformlift-System 25 installiert ist.

Das Plattformlift-System 25 umfasst eine Hubeinheit 27 mit einem Hubelement 6, das in Richtung des Doppelpfeils H in Figur 2 relativbeweglich gegenüber einem Tragelement 7 angeordnet ist. Das Tragelement 7 ist in der gezeigten Ausführungsform als sich in Fahrzeughochrichtung erstreckende Vertikalstütze ausgebildet.

Teil der Hubeinheit 27 ist auch ein Gelenk 10 und ein Tragrahmen 9, welcher mit dem Gelenk 10 verbunden ist. Der Tragrahmen 9 erstreckt sich in der in den Figuren 1 und 2 gezeigten Transportposition des Plattformlift-System im Wesentlichen in Fahrzeughochrichtung und in Fahrzeugquerrichtung.

Der Tragrahmen 9 ist mit einer Plattform 8 verbunden, die sich im Wesentlichen in horizontaler Richtung erstreckt, d.h. in Fahrzeuglängsrichtung und in Fahrzeugquerrichtung.

Das Plattformlift-System 25 dient dazu, eine auf einem Transportstuhl 5 sitzende Transportperson 13 auf einfache Art und Weise innerhalb des Kraftfahrzeuges 1 in einen transportfähigen Zustand zu bringen.

Im Folgenden wird die Detailgestaltung des Plattformlift-Systems 25 sowie die Funktionsweise anhand der Figuren 1 bis 10 erläutert.

In Figur 2 sind zunächst weitere technische Merkmale des Plattformlift-Systems 25 erkennbar. An einer Seite des Tragrahmens 9 (in Figur 2 an der linken Seite) sind ein Gurt 20, eine untere Gurt-Umlenkrolle 21, eine obere Gurt-Umlenkrolle 23 und ein Gurt-Ankerpunkt 22 angeordnet. Bei dem dargestellten Gurt 20 handelt es sich um einen bekannten 3-Punkt-Gurt mit einer daran befestigten Schlosszunge 28.

An der gegenüberliegenden Seite des Tragrahmens 9 (in Figur 2 an der rechten Seite) ist ein Gurtschloss 24 an einem sich von der Plattform 8 bzw. von einem unteren Abschnitt des Tragrahmens 9 schräg nach oben erstreckenden Halteelement 29 befestigt.

Mit Hilfe des Gurtes 20 lässt sich eine auf einem Transportstuhl 5 sitzende Transportperson 13 - wie in Figur 2 gezeigt - anschnallen und innerhalb des Kraftfahrzeuges 1 auf einfache Art und Weise innerhalb des Transportstuhls 5 fixieren. Der Gurt ist daher ein Fixierelement im Sinne der Erfindung.

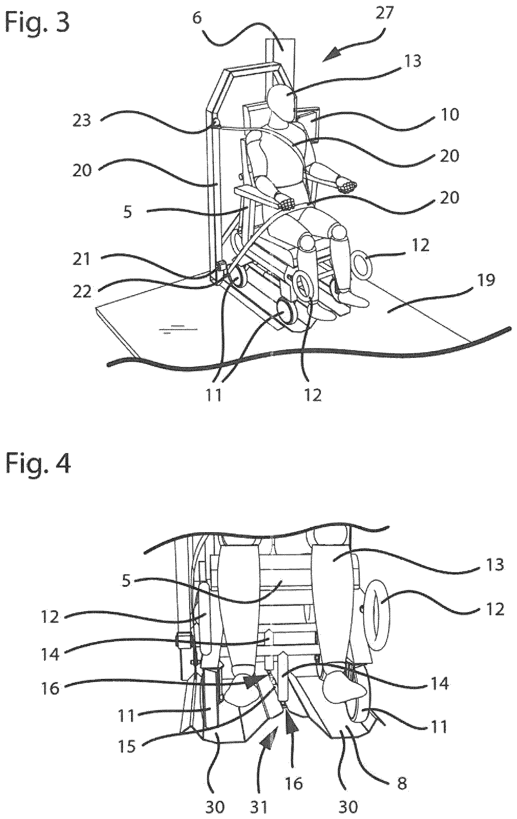

Wie in den Figuren 3 und 4 gut erkennbar ist, weist der Transportstuhl 5 vier Räder 11 und vier Tragegriffe 12 auf, wobei jeweils zwei dieser Elemente vorderseitig und zwei rückseitig angeordnet sind. Es handelt sich um einen aus der Branche bekannten Tragestuhl.

In Figur 4 ist gut erkennbar, dass die Plattform 8 in der gezeigten Ausführungsform zwei als Führung für die Räder 11 dienende Fahrrinnen 30 aufweist, die sich in Längsrichtung der Plattform 8 erstrecken. Zwischen den Fahrrinnen 30 ist ein gegenüber den Fahrrinnen 30 erhöhter Mittelsteg 31 ausgebildet. In dem Mittelsteg 31 ist ein sich in Längsrichtung der Plattform 8 erstreckender Schlitz 15 ausgebildet.

An dem Transportstuhl 5 sind zwei, sich in vertikaler Richtung erstreckende Kupplungselemente 14 vorgesehen, die hier stabartig ausgebildet sind. Am unteren Ende dieser Kupplungselemente 14 sind - hier pilzkopfartig ausgebildete - Führungselemente 16 ausgebildet, welche in der in den Figuren gezeigten Relativanordnung zwischen Transportstuhl 5 und Plattform 8 den Schlitz 15 durchgreifen und eine formschlüssige Fixierung des Transportstuhls 5 gegenüber der Plattform 8 in Hochrichtung und in Querrichtung bewirken.

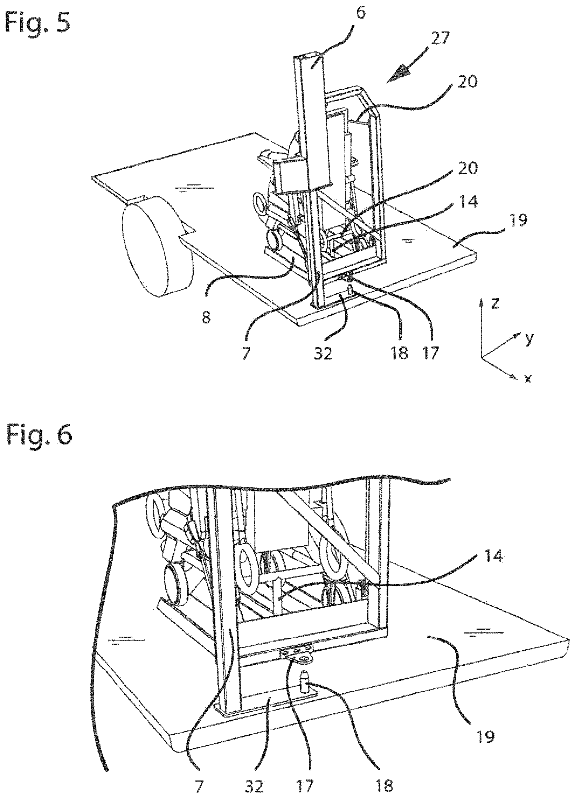

Wie in den Figuren 5 bis 7 gut erkennbar ist, ist rückseitig an der Plattform 8 eine Bolzenaufnahme 17 ausgebildet. Diese besteht in der gezeigten Ausführungsform aus einem Winkelblech mit einer kreisförmigen Durchgangsöffnung. An dem Tragelement 7 der Hubeinheit 27 ist ein Bolzen 18 ausgebildet, der sich vom Fahrzeugboden 19 aus in Fahrzeughochrichtung nach oben erstreckt. In der gezeigten Ausführungsform ist der Bolzen Teil an einer am Fahrzeugboden 19 befestigten Materiallasche 32, die fest mit dem Tragelement 7 der Hubeinheit 27 verbunden ist.

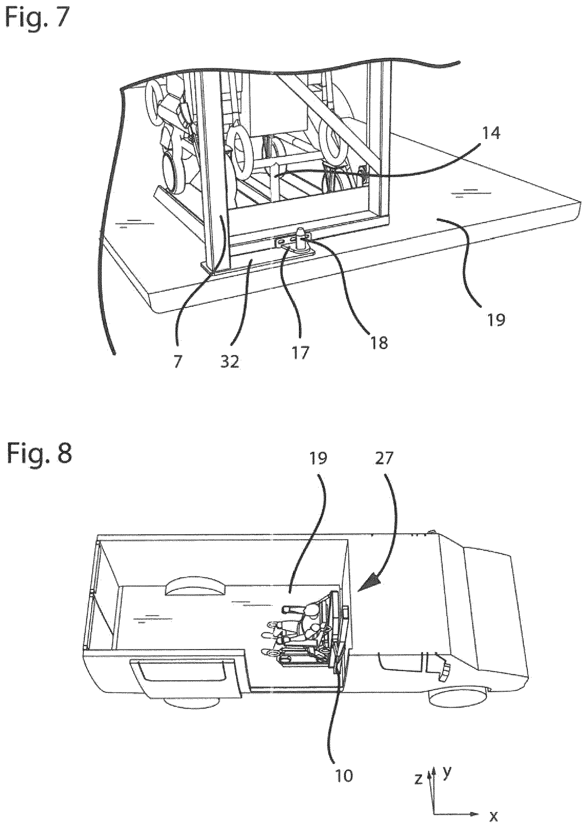

Die Bolzenaufnahme 17 und der Bolzen 18 dienen als Fixierelement und Fixierelement-Aufnahme zur Fixierung der Plattform 8 gegenüber dem Fahrzeugboden 19 des Kraftfahrzeuges bzw. gegenüber dem Tragelement 7 der Hubeinheit 27. Um die Fixierung der Plattform 8 herzustellen, muss die Plattform 8 lediglich aus der in den Figuren 5 und 6 gezeigten Position mittels der Hubeinheit 27 abgesenkt werden, so dass der Bolzen 18 die Bolzenaufnahme 17 durchragt, wie in Figur 7 dargestellt. Die Plattform ist dann in Fahrzeuglängsrichtung und in Fahrzeugquerrichtung formschlüssig gegenüber dem Fahrzeugboden 19 festgelegt, insbesondere wenn ein Verdrehen der Plattform 8 schwerkraftbedingt und/oder aufgrund eines ausreichend großen Motorwiderstandes eines mit dem Gelenk 10 gekoppelten Antriebsmotors ausgeschlossen ist.

Alternativ zu der gezeigten Ausführungsform können in einer nicht dargestellten Ausführungsform auch zwei Bolzen und zwei Bolzenaufnahmen vorgesehen sein, um eine formschlüssige Fixierung auch gegenüber einem Verdrehen der Plattform 8 gegenüber dem Fahrzeugboden 19 herzustellen.

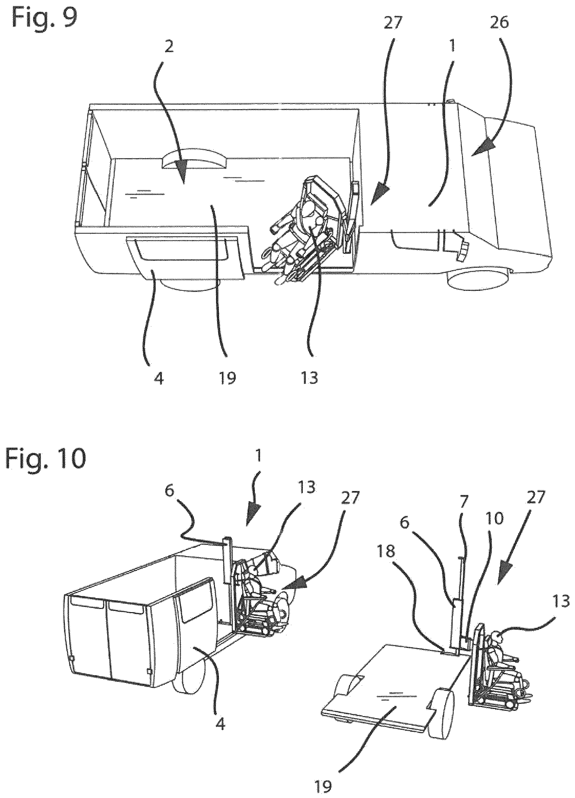

Aus einer Zusammenschau der Figuren 8 bis 10 lässt sich erkennen, wie sich die Plattform 8 in horizontaler Richtung mit Hilfe des Gelenks 10, welches Teil einer nicht im Detail gezeigten Verfahrvorrichtung ist, translatorisch und rotatorisch bewegen lässt. Der Transportstuhl 5 mit einer darauf sitzenden Transportperson 13 lässt sich als eine relativ zueinander fixierte Einheit aus der in Figur 8 gezeigten Transportposition in die in Figur 10 gezeigte Außenposition verfahren. Dies kann manuell erfolgen, wenn kein motorischer Antrieb vorgesehen ist oder mittels eines geeigneten Antriebs. Um zunächst die Verbindung aus Bolzen 18 und Bolzenaufnahme 17 zu lösen, muss in einem ersten Verfahrensschritt die Plattform 8 mittels der Hubeinheit 27 angehoben werden, bis der Bolzen außer Eingriff der Bolzenaufnahme 17 gelangt ist. Dann kann die Plattform 8 mit dem Transportstuhl 5 in die Außenposition verschwenkt werden. Besonders vorteilhaft ist es, wenn die Hubeinheit 27 dazu ausgebildet ist, die Plattform in der Außenposition bis auf das Fahrbahnniveau abzusenken, um dann den Transportstuhl 5 mittels der Räder 11 von der Plattform 8 auf die Fahrbahn oder den Bürgersteig zu schieben und zu einem Zielort zu bewegen.

### Bezugszeichenliste

- 1: Kraftfahrzeug
- 2: Transportraum
- 3: Trennwand
- 4: Seitentür
- 5: Transportstuhl
- 6: Hubelement
- 7: Tragelement
- 8: Plattform
- 9: Tragrahmen
- 10: Gelenk
- 11: Rad
- 12: Griff
- 13: Transportperson
- 14: Kupplungselement
- 15: Schlitz
- 16: Pilzkopf
- 17: Bolzenaufnahme
- 18: Bolzen
- 19: Fahrzeugboden
- 20: Gurt
- 21: untere Gurt-Umlenkrolle
- 22: Gurt-Ankerpunkt
- 23: obere Gurt-Umlenkrolle
- 24: Gurtschloss
- 25: Plattformlift-System
- 26: Fahrerkabine
- 27: Hubeinheit
- 28: Schlosszunge
- 29: Haltearm
- 30: Fahrrinne
- 31: Mittelsteg
- 32: Materiallasche

## Patentansprüche

1. Kraftfahrzeug (1) umfassend ein Plattformlift-System (25) zum Einladen eines Transportstuhls (5) in das Kraftfahrzeug (1) mit einer Plattform (8) für die Aufnahme des Transportstuhls (5) mit einer Transportperson (13), mit einer Hubeinheit (27) zur Durchführung von vertikalen Relativbewegungen der Plattform (8) zwecks Anheben und Absenken der Plattform (8) und mit einer Verfahrvorrichtung zur Durchführung von horizontalen Relativbewegungen zwischen der Plattform (8) und der Hubeinheit (27),
**dadurch gekennzeichnet,**
**dass** an einem Element des Plattformlift-Systems (25) und/oder an einem Element des Kraftfahrzeuges (1) mindestens ein Fixierelement zur Fixierung der Plattform (8) gegenüber der Hubeinheit (27) vorgesehen ist,
an einem Element des Plattformlift-Systems (25) und/oder an einem Element des Kraftfahrzeuges (1), in welchem das Plattformlift-System (25) installiert ist, mindestens eine mit dem Fixierelement korrespondierende Fixierelement-Aufnahme zur Herstellung einer Verbindung zwischen Fixierelement und Fixierelement-Aufnahme angeordnet ist, wobei
als Fixierelement und als Fixierelement-Aufnahme zur Fixierung der Plattform (8) gegenüber der Hubeinheit (27) an der Plattform (8) und an der Hubeinheit (27) mindestens ein Bolzen (18) und eine mit dem Bolzen korrespondierende Bolzenaufnahme (17) vorgesehen sind und wobei
der Bolzen (18) und die Bolzenaufnahme (17) als Vertikalverbindungselemente derart gestaltet sind, dass die formschlüssige Verbindung durch Anheben und Absenken der Plattform (8) herstellbar und lösbar ist.

2. Kraftfahrzeug (1) nach dem vorstehenden Anspruch, **dadurch gekennzeichnet, dass** zur Fixierung des Transportstuhls (5) und/oder der Transportperson (13) gegenüber der Plattform (8) an der Plattform (8) oder an der Hubeinheit (27) mindestens ein Gurt (20) angeordnet ist.

3. Kraftfahrzeug (1) nach dem vorstehenden Anspruch, **dadurch gekennzeichnet, dass** an der Plattform (8) oder an der Hubeinheit (27) mindestens ein Gurtschloss (24) zur Festlegung des Gurtes (20) angeordnet ist.

4. Kraftfahrzeug (1) nach einem der beiden vorstehenden Ansprüche, **dadurch gekennzeichnet, dass** der Gurt (20) und/oder das Gurtschloss (24) außenseitig der Plattform (8) angeordnet sind.

5. Kraftfahrzeug (1) nach einem der vorstehenden Ansprüche, **dadurch gekennzeichnet, dass** die Plattform (8) fest verbunden ist mit einem sich in vertikaler Richtung erstreckenden Tragabschnitt.

6. Kraftfahrzeug (1) nach einem der vorstehenden Ansprüche, **dadurch gekennzeichnet, dass** die Plattform (8) verschwenkbar gegenüber der Hubeinheit (27) gelagert ist.

7. Kraftfahrzeug (1) nach dem vorstehenden Anspruch, **dadurch gekennzeichnet, dass** die Plattform (8) funktional über ein Gelenk (10) mit der Hubeinheit (27) verbunden ist.

8. Kraftfahrzeug (1) nach einem der vorstehenden Ansprüche, **dadurch gekennzeichnet, dass** an der Plattform (8) ein erhöhter Mittelsteg (31) und/oder ein Schlitz (15) zum Zusammenwirken mit einem Kupplungselement (14) eines Transportstuhls (5) ausgebildet ist.

9. Kraftfahrzeug (1) nach einem der vorstehenden Ansprüche, **dadurch gekennzeichnet, dass** an der Plattform (8) als Führung für Räder (11) eines Transportstuhls (5) dienende Fahrrinnen (30) ausgebildet sind und/oder an der Plattform (8) ein Fixierabschnitt für einen Transportstuhl (5) ausgebildet ist.

10. Kraftfahrzeug (1) nach einem der vorstehenden Ansprüche, **dadurch gekennzeichnet, dass** die Verfahrvorrichtung dazu ausgebildet ist, die Plattform (8) zwischen einer Außenposition außerhalb des Kraftfahrzeuges (1) und einer Transportposition innerhalb des Kraftfahrzeuges (1) verfahren zu können.

11. Kraftfahrzeug (1) nach dem vorstehenden Anspruch, **dadurch gekennzeichnet, dass** eine Antriebseinheit und eine Steuereinheit für die Verfahrvorrichtung und/oder die Hubeinheit (27) vorgesehen sind, wobei eine geführte Bewegung von der Außenposition in die Transportposition vorgesehen ist.

12. Kraftfahrzeug (1) nach einem der beiden vorstehenden Ansprüche, **dadurch gekennzeichnet, dass** die Hubeinheit (27) fahrzeugfest montiert ist und/oder insbesondere an einer Trennwand (3) nahe einer Seitentür (4) angeordnet ist und/oder dazu ausgebildet ist, die Plattform (8) von einem Fahrzeugboden (19) bis auf ein Fahrbahnniveau abzusenken.

## Claims

1. Motor vehicle (1), comprising a platform lift system (25) for loading a transport chair (5) into the motor vehicle (1), having a platform (8) for receiving the transport chair (5) together with a person being transported (13), having a lifting unit (27) for carrying out vertical relative movements of the platform (8) for the purpose of lifting and lowering the platform (8), and having a travel device for carrying out horizontal relative movements between the platform (8) and the lifting unit (27),
**characterized in**
**that** at least one fixing element for fixing the platform (8) in relation to the lifting unit (27) is provided on an element of the platform lift system (25) and/or on an element of the motor vehicle (1),
**that** at least one fixing element receptacle corresponding to the fixing element for producing a connection between the fixing element and the fixing element receptacle is arranged on an element of the platform lift system (25) and/or on an element of the motor vehicle (1) in which the platform lift system (25) is installed, wherein
at least one bolt (18) and a bolt receptacle (17) corresponding to the bolt are provided as a fixing element and as a fixing element receptacle for fixing the platform (8) relative to the lifting unit (27) on the platform (8) and on the lifting unit (27), and wherein
the bolt (18) and the bolt receptacle (17) are designed as vertical connecting elements in such a way that the form-fitting connection can be established and released by lifting and lowering the platform (8).

2. Motor vehicle (1) according to the preceding claim, **characterized in that** at least one belt (20) is arranged on the platform (8) or on the lifting unit (27) for securing the transport chair (5) and/or the person being transported (13), relative to the platform (8).

3. Motor vehicle (1) according to the preceding claim, **characterized in that** at least one belt buckle (24) for securing the belt (20) is arranged on the platform (8) or on the lifting unit (27).

4. Motor vehicle (1) according to either of the two preceding claims, **characterized in that** the belt (20) and/or the belt buckle (24) is/are located on the outside of the platform (8).

5. Motor vehicle (1) according to any one of the preceding claims, **characterized in that** the platform (8) is fixedly connected to a supporting section extending in the vertical direction.

6. Motor vehicle (1) according to any one of the preceding claims, **characterized in that** the platform (8) is mounted pivotably in relation to the lifting unit (27).

7. Motor vehicle (1) according to the preceding claim, **characterized in that** the platform (8) is functionally connected to the lifting unit (27) via a joint (10).

8. Motor vehicle (1) according to any one of the preceding claims, **characterized in that** a raised central web (31) and/or a slot (15) for interacting with a coupling element (14) of a transport chair (5) is/are formed on the platform (8).

9. Motor vehicle (1) according to any one of the preceding claims, **characterized in that** guide channels (30) serving as a guide for wheels (11) of a transport chair (5) are formed on the platform (8) and/or a fixing section for a transport chair (5) is formed on the platform (8).

10. Motor vehicle (1) according to any one of the preceding claims, **characterized in that** the travel device is designed to be able to move the platform (8) between an external position outside the motor vehicle (1) and a transport position inside the motor vehicle (1).

11. Motor vehicle (1) according to the preceding claim, **characterized in that** a drive unit and a control unit for the travel device and/or the lifting unit (27) are provided, with a guided movement from the external position to the transport position being provided.

12. Motor vehicle (1) according to one of the two preceding claims, **characterized in that** the lifting unit (27) is installed in a fixed manner to the vehicle and/or in particular is arranged on a partition wall (3) near a side door (4) and/or is designed to lower the platform (8) from a vehicle floor (19) down to road level.

## Revendications

1. Véhicule automobile (1) comprenant un système de plate-forme élévatrice (25) servant à charger un fauteuil de transport (5) dans le véhicule automobile (1), comprenant une plate-forme (8) destinée à recevoir le fauteuil de transport (5) avec une personne transportée (13), comprenant une unité de levage (27) destinée à effectuer des mouvements relatifs verticaux de la plate-forme (8) en vue de lever et d'abaisser la plate-forme (8) et comprenant un dispositif de déplacement destiné à effectuer des mouvements relatifs horizontaux entre la plate-forme (8) et l'unité de levage (27),
**caractérisé en ce**
**qu'**au moins un élément de fixation destiné à fixer la plate-forme (8) par rapport à l'unité de levage (27) est prévu sur un élément du système de plate-forme élévatrice (25) et/ou sur un élément du véhicule automobile (1),
**qu'**au moins un logement d'élément de fixation correspondant à l'élément de fixation est disposé sur un élément du système de plate-forme élévatrice (25) et/ou sur un élément du véhicule automobile (1) dans lequel est installé le système de plate-forme élévatrice (25) en vue d'établir une liaison entre l'élément de fixation et le logement d'élément de fixation,
au moins un boulon (18) et un logement de boulon (17) correspondant au boulon (18) étant prévus sur la plate-forme (8) et sur l'unité de levage (27), comme élément de fixation et comme logement d'élément de fixation, en vue de fixer la plate-forme (8) par rapport à l'unité de levage (27), et
le boulon (18) et le logement de boulon (17) étant réalisés sous la forme d'éléments de liaison verticaux de telle sorte que la liaison par complémentarité de formes peut être établie et rompue par le levage et l'abaissement de la plate-forme (8).

2. Véhicule automobile (1) selon la revendication précédente, **caractérisé en ce qu'**au moins une ceinture (20) est disposée sur la plate-forme (8) ou sur l'unité de levage (27) pour fixer le fauteuil de transport (5) et/ou la personne transportée (13) par rapport à la plate-forme (8).

3. Véhicule automobile (1) selon la revendication précédente, **caractérisé en ce qu'**au moins une boucle de ceinture (24) destinée à fixer la ceinture (20) est disposée sur la plate-forme (8) ou sur l'unité de levage (27).

4. Véhicule automobile (1) selon l'une des deux revendications précédentes, **caractérisé en ce que** la ceinture (20) et/ou la boucle de ceinture (24) sont disposées sur le côté extérieur de la plate-forme (8).

5. Véhicule automobile (1) selon l'une des revendications précédentes, **caractérisé en ce que** la plate-forme (8) est reliée de manière fixe à une section porteuse qui s'étend dans la direction verticale.

6. Véhicule automobile (1) selon l'une des revendications précédentes, **caractérisé en ce que** la plate-forme (8) est montée de manière pivotante par rapport à l'unité de levage (27).

7. Véhicule automobile (1) selon la revendication précédente, **caractérisé en ce que** la plate-forme (8) est reliée fonctionnellement à l'unité de levage (27) par l'intermédiaire d'une articulation (10).

8. Véhicule automobile (1) selon l'une des revendications précédentes, **caractérisé en ce qu'**une nervure centrale surélevée (31) et/ou une fente (15) est/sont formée(s) sur la plate-forme (8) pour coopérer avec un élément d'accouplement (14) d'un fauteuil de transport (5).

9. Véhicule automobile (1) selon l'une des revendications précédentes, **caractérisé en ce que** des ornières (30) servant de guidage pour des roues (11) d'un fauteuil de transport (5) sont formées sur la plate-forme (8) et/ou une section de fixation pour un fauteuil de transport (5) est formée sur la plate-forme (8).

10. Véhicule automobile (1) selon l'une des revendications précédentes, **caractérisé en ce que** le dispositif de déplacement est conçu pour pouvoir déplacer la plate-forme (8) entre une position extérieure à l'extérieur du véhicule automobile (1) et une position de transport à l'intérieur du véhicule automobile (1).

11. Véhicule automobile (1) selon la revendication précédente, **caractérisé en ce qu'**une unité d'entraînement et une unité de commande sont prévues pour le dispositif de déplacement et/ou l'unité de levage (27), un mouvement guidé de la position extérieure à la position de transport étant prévu.

12. Véhicule automobile (1) selon l'une des deux revendications précédentes, **caractérisé en ce que** l'unité de levage (27) est installée de manière fixe dans le véhicule et/ou est disposée en particulier au niveau d'une paroi de séparation (3) à proximité d'une porte latérale (4) et/ou est conçue pour abaisser la plate-forme (8) d'un plancher de véhicule (19) jusqu'à un niveau de chaussée.
